# EUROPEAN PATENT SPECIFICATION

(11) **EP 1 455 519 B1**
(45) Date of publication and mention of the grant of the patent: **19.10.2011**
(21) Application number: 03290575.4
(22) Date of filing: 07.03.2003
(51) Int. Cl.: H04N 1/04, H04N 1/207, F16H 3/00

(54) **Method for initializing a drive unit and the drive unit**
Initialisierungsverfahren einer Antriebseinheit und die Antriebseinheit
Procédé d'initialisation d'une unité d'entrainement et l'unité d'entrainement

(43) Date of publication of application: 08.09.2004
(73) Proprietor: SAGEMCOM DOCUMENTS SAS, 92500 Rueil Malmaison (FR)
(72) Inventor: Veigl, Johann, 1100 Wien (AT); Potakowskij, Christoph, 1100 Wien (AT)
(74) Representative: Bloch, Gérard

(56) References cited:
- EP-A- 0 438 348
- EP-A- 0 460 832
- EP-A- 0 505 969
- WO-A-01/49021
- US-A- 4 866 531
- US-A- 5 854 696
- US-A1- 2002 118 395
- US-B1- 6 333 796

## Description

The invention relates to an initialization method for a drive unit or the like having a motor whose direction of rotation can be switched over, an intermediate gear mechanism which can be driven by means of the motor, and a carrier which can be driven in a first direction of rotation by the motor by means of a unidirectional clutch.

A drive unit which can be adapted for the initialization method according to the invention is described in WO 01/49021. A base part which can be driven in rotation by means of the motor is provided here, said base part being connected to a carrier comprising a control part via a first unidirectional clutch and to a drive part via a second unidirectional clutch. For each drive gearwheel, a swivel pinion is provided which is rotatably mounted on a swivel arm which is mounted so as to be capable of swivelling about the axis of the respective drive gearwheel. This swivel pinion intermeshes continuously with the respective drive gearwheel and can be engaged with the drive part by swivelling the swivel arm. The swivel arm has for this purpose a control pin which engages in a slot which is provided in the control part. If the base part is driven in the first direction of rotation, the first unidirectional clutch engages and the control part is rotated. This brings about swivelling of the swivel arms and forms drive connections between the drive part and one or more drive gearwheels. As soon as the desired positions of the swivel arms have been reached, the direction of rotation of the base part is reversed. In the process, the first unidirectional clutch disengages and the second unidirectional clutch engages with the result that there is now a drive connection between the base part and the drive part, and thus between the motor and the drive gearwheels.

This structure has a number of disadvantages: position sensors or the like are necessary to control the drive unit, in particular to determine the position of the carrier.

Two unidirectional clutches are required, the entire drive torque for the drive gearwheels being transmitted via the second undirectional clutch, for which purpose said unidirectional clutch must be of very robust design.

Finally, for each drive gearwheel, a swivel arm with swivel pinion mounted on it and with a control pin engaging in the slot of the control part must be provided. All this is technically complex and entails an additional, relatively high expenditure in terms of material.

The document US 2002/0118395 describes a gear changing device comprising a sun wheel and two planetary wheels. If the sun wheel rotates anticlockwise, the planetary wheels are driving, if the sun wheel rotates clockwise, the planetary are swivelling. This is due to clutch spring and a regulating unit, which constitute an enormous and sophisticated mean.

The object of the invention is to specify an initialization method of the type specified at the beginning for a drive unit in which the aforesaid disadvantages are avoided, which method can be carried out particularly easily and has a high degree of functional reliability, while the drive unit requires only a small number of components.

This is achieved in accordance with the invention in that the carrier, which has first latching means which can be engaged, forming latching positions, with second latching means connected to a housing or the like, is moved in a cycle in me first direction of rotation by an initializing distance which can be predefined in the range between the largest distance between two adjacent latching positions, which is formed precisely once, and the second largest distance between two adjacent latching positions, and the motor is then moved with a movement corresponding at least to a movement of the carrier by the initialization distance in the opposite second direction of rotation, and this cycle is repeated in accordance with the number of latching positions.

This provides the advantage that a precisely defined starting position is achieved solely through the steps of the initialization method, additional supporting means such as sensors or the like not being required. As a result, it is possible to make available a simple, cost-effective and reliable drive unit with which the starting position is reliably reached.

In a development of the invention it is possible to provide that, after initialization has taken place, the motor is moved with a movement corresponding at least to a movement of the carrier by the largest distance between two adjacent latching positions in the second direction of rotation. This movement can ensure that the carrier is already definitely arranged in a latching position after the first cycle. The invention also relates to a drive unit having a motor whose direction of rotation can be switched over, an intermediate gear mechanism which can be driven by means of the motor, at least two drive gearwheels which can be driven using the motor by means of the intermediate gear mechanism, the intermediate gear mechanism having the purpose of optionally bringing about a drive connection between the motor and at least one drive wheel.

The object of the invention is to disclose a drive unit of the type specified above, in which the aforesaid disadvantages are avoided and which has a particularly simple, functionally reliable structural design which requires a small number of components.

This is achieved according to the invention in that the intermediate gear mechanism comprises: a main gearwheel which can be driven in rotation by means of the motor and has an axle stub on which a sun wheel is secured and a planetary wheel carrier is rotatably mounted, at least one planetary wheel which is rotatably mounted in the planetary wheel carrier and intermeshes with the sun wheel, and a swivel wheel which is arranged coaxially with respect to the planetary wheel, is connected to the planetary wheel via a unidirectional clutch and intermeshes with a swivel toothing which is arranged in the housing.

This solution requires significantly fewer components than the previously known design, in particular the drive torque can be transmitted to the drive gearwheels by the motor without a clutch. The elimination of swivel arms and swivel pinions leads to a more compact, more functionally reliable structure.

In a further refinement of the invention it is possible to provide that latching projections which are arranged on the housing directly adjacent to the edge of the planetary wheel carrier and which have latching faces which are radial with respect to the main axis of the intermediate gear mechanism, and that elastically sprung latching arms are secured to the planetary wheel carrier so as to project beyond its edge and the free ends of said latching arms can be made to bear against the latching faces of the latching projections.

The planetary wheel carrier can thus be positioned very precisely, and the means (latching projections and latching arms) required for this entail only very low expenditure.

In this context it is possible to provide that the latching projections are arranged on walls which are constructed in the form of hollow-cylinder sections and are secured to the housing so as to run coaxially with respect to the planetary wheel carrier.

The latching projections are thus secured in a very stable fashion and there is virtually no risk of breaking away.

In one particularly preferred embodiment of the invention it is possible to provide that the angular intervals which two adjacent latching projections or two adjacent axes of the drive gearwheels enclose with one another with respect to the main axis of the intermediate gear mechanism are, with the exception of a first angular interval, of equal magnitude and are each smaller than this first angular interval.

Owing to this dimensioning of the angular intervals between adjacent axes or latching projections, the planetary wheel carrier can be moved into the various operating states using particularly simple control instructions, and into a defined starting position with a particularly low expenditure. This leads ultimately to the situation in which no position sensors are required to actuate the planetary wheel carrier.

The invention is explained below in more detail with reference to the appended drawings, in which:
Fig. 1 shows a cross section through a part of a device which is essential in the present context and has an original-sheet drive roller, a blank-sheet separation roller and a printer roller;
Fig. 2 shows an exploded view of a drive unit according to the invention;
Fig. 3 shows a plan view of the drive unit 1 according to the invention in Fig. 2;
Fig. 4 shows a plan view of the drive unit 1 according to the invention in Fig. 3, the latter being located in the blank-sheet-separating mode;
Fig. 5 shows a plan view of the drive unit 1 according to the invention in Figs 3 and 4, the latter being in the printing mode;
Fig. 6 shows a plan view of the drive unit 1 according to the invention in Figs 3 to 5, said drive unit 1 being in the copying mode;
Fig. 7 shows a plan view of the drive unit 1 according to the invention in Figs 3 to 6, said drive unit 1 being in the scanning mode;
Fig. 8 shows an oblique view of another embodiment of a drive unit which is suitable for the initialization method according to the invention; and
Fig. 9 shows an oblique view from below of the carrier of the drive unit according to Fig. 8.

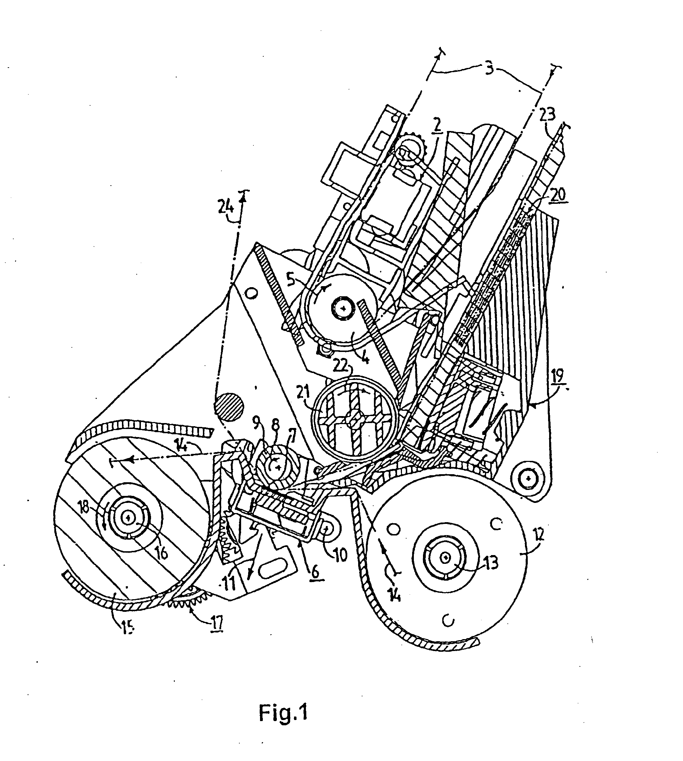

Fig. 1 illustrates a device in the form of a facsimile unit in which the drive unit 1 according to the invention can be used.

The device has a scanning device 2 with which an original sheet can be scanned in order to convert the image information, for example alphanumeric characters, contained on this original sheet into digital signals. Such an original sheet can be transported incrementally along a transport path 3 indicated in Fig. 1 by a dot-dashed line. In order to transport, that is to say drive, an original sheet incrementally, the device has an original-sheet drive roller 4 which can be driven in rotation in order to drive an original sheet in the direction of an arrow 5, that is to say in the clockwise direction.

The device also contains a printing device 6 which is provided with a printing head 7. The printing head 7 is a thermal printing head which has an essentially strip-shaped design and with which it is possible to print in the form of dots. This printing is carried out on a blank sheet which can be driven incrementally using a printer roller 9 which can be driven in the direction of the arrow 8, that is to say also in the clockwise direction. The printer roller 9 interacts with the printing head 7. The printer roller 9 is rotatably mounted in the device but is otherwise held in a fixed fashion. The printing device 6 is held against the printer roller 9 using spring means (not explained in more detail), with the result that the printing head 7 is pressed in a sprung fashion against the printer roller 9.

In the device, a thermal-transfer printing method can be carried out using the printing head 7. In this thermal-transfer printing method, the printing head 7 is used to heat points on a thermal transfer film, resulting in a wax-like ink which is connected to the thermal transfer film being transferred to the blank sheet to be printed on. The aforesaid thermal transfer film is wound onto a first roll 12, the first roll 12 with the supply of thermal transfer film being borne by an unwinding mandrel 13. From the first roll 12, the thermal transfer film is led to a second roll 15 along a transport path 14 which is indicated in Fig. 1 by a dot-dashed line, said second roll 15 being borne by a winding mandrel 16. The winding mandrel 16 can be driven from the printer roller 9 in the direction of an arrow 18, via a gearwheel mechanism 17 (shown partially in Fig. 1).

In order to print a blank sheet, such a blank sheet must be removed, that is to say separated, from a blank-sheet receptacle 19 which contains a stack 20 of such blank sheets. For this purpose, the device has a blank-sheet separation roller 21 which can be driven in rotation in the direction of an arrow 22, that is to say also in the clockwise direction. Using the blank-sheet separation roller 21, the respective topmost blank sheet of the stack 20 of blank sheets can be removed from the blank-sheet receptacle 19 and transported into the region between the printing head 7 and the printer roller 9. As soon as a blank sheet has reached the printer roller 9, the blank sheet to be printed on is driven further using the printer roller 9, the blank-sheet separation roller 21 then being deactivated in terms of drive, as is already known per se of such devices. A blank sheet is moved along a transport path 23 (specified with a dot-dashed line) between blank-sheet receptacle 19 and the printer roller 9. After the blank sheet has been printed on, the printed sheet is moved along a transport path 24 (also indicated in Fig. 1 with a dot-dashed line).

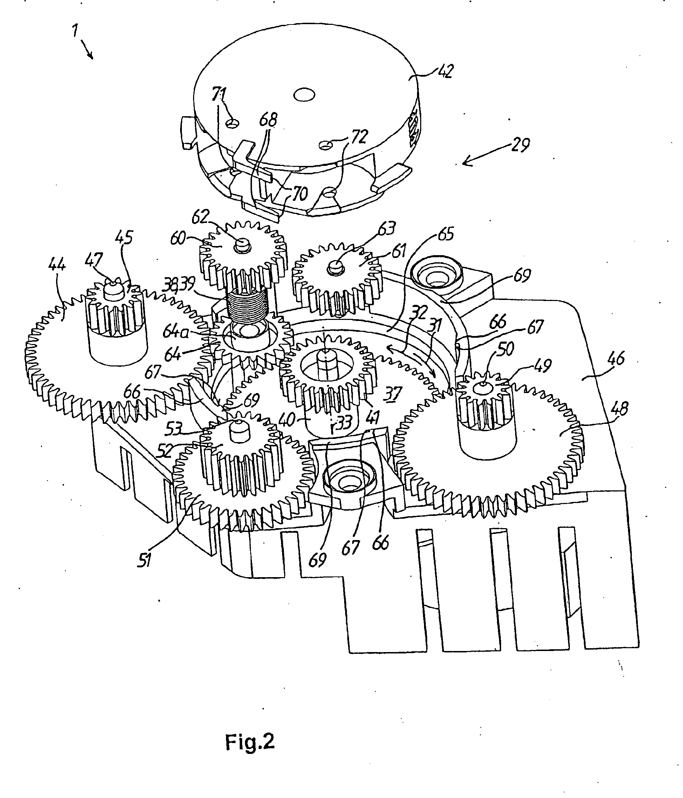

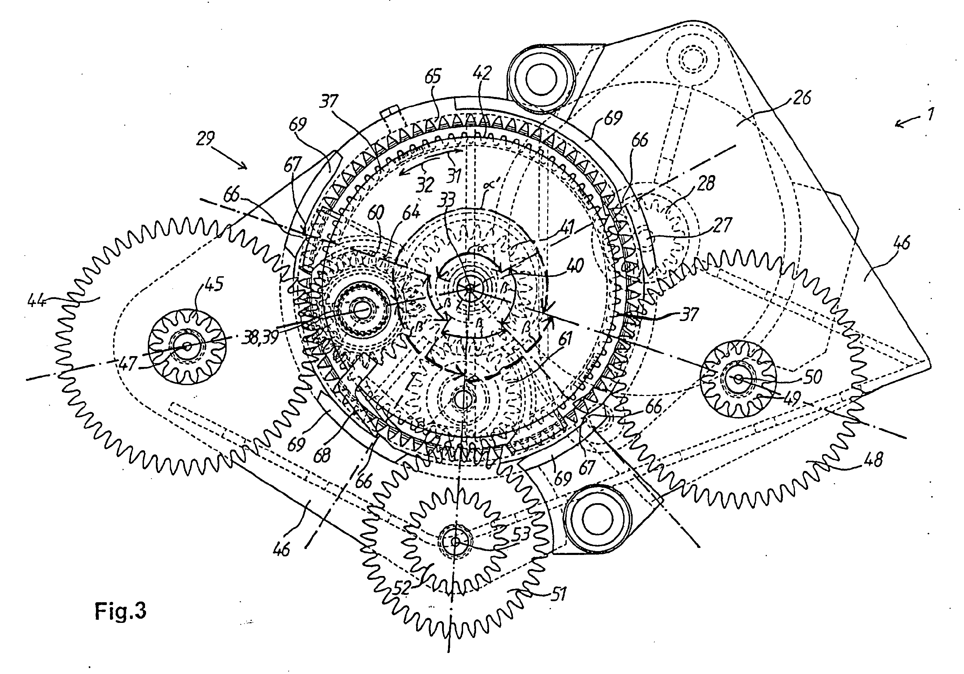

A drive unit 1, which can be used to drive in rotation the original-sheet drive roller 4, the printer roller 9 and the blank-sheet separation roller 21 and which can additionally also be used to drive the winding mandrel 16 in rotation, is described below with reference to Figs 2 and 3. This drive unit 1 can thus be used to drive or adjust a multiplicity of components of the device in a particularly advantageous way.

The drive unit 1 contains a stepping motor 26 whose direction of rotation can be switched over and which has a motor shaft 27 to which a motor pinion 28 is connected fixed in terms of rotation (cf. Fig. 3). This motor 26 is used to drive an intermediate gear mechanism 29, which is described in detail in the following text, is embodied in the manner of a planetary gear mechanism and has the purpose of, in turn, optionally bringing about a drive connection between the motor 26 and at least one of the drive wheels 44, 48, 51.

The motor 26, the intermediate gear mechanism 29 and the drive wheels 44, 48, 51 are held in a housing 46.

A coaxial first pinion 45 is connected to the first drive wheel 44 and both are mounted so as to be capable of rotating about a first axis 47 which is held fixedly in the housing 46. A coaxial second pinion 49 is secured to the second drive gearwheel 48, both gearwheels are mounted so as to be capable of rotating about a second axis 50 which is also held fixedly in the housing 46. A coaxial third pinion 52 is connected to the third drive wheel 51, and these two gearwheels are also mounted so as to be capable of rotating about a third axis 53 which is held in the housing 46.

The first drive wheel 44 is provided for driving the original-sheet drive roller 4 for incrementally moving along an original sheet to be scanned. For this purpose, the first pinion 45 has a drive connection to the original-sheet drive roller 4 via further gearwheels (not illustrated in the drawings for sake of better clarity).

The second drive gearwheel 48 is used to drive the blank-sheet separation roller 21, for which purpose a second pinion 49 is connected to the blank-sheet separation roller 21 via gearwheels (not illustrated) or other devices, for example belt drives, which are suitable for transmitting torques.

The printer roller 9, and additionally the winding mandrel 16 for the thermal transfer film are driven by means of the third drive gearwheel 51, for which purpose the third pinion 53 has a drive connection to these components.

The intermediate gear mechanism 29 has a main gearwheel 37 which is mounted in the housing 46 so as to be capable of rotating about the main axis 33 of the intermediate gear mechanism 29, the motor pinion 28 engaging in said main gearwheel 37. The main gearwheel 37 can be driven either in a first direction 31 of rotation, that is to say in the clockwise direction, or in a second direction 32 of rotation, that is to say in the anticlockwise direction. A stub axle 40, on which a sun wheel 41 is secured, is arranged on this main gearwheel 37. Furthermore, a planetary wheel carrier 42 which is embodied in a flat-cylindrical fashion in the exemplary embodiment in the drawings and which is rotatably mounted on the stub axle 40 is present. Two planetary wheels 60, 61 are rotatably mounted in this planetary wheel carrier 42, for which purpose the latter have stub axles 62, 63 which are inserted into corresponding drilled holes 71, 72 in the planetary wheel carrier 42. These planetary wheels 60, 61 continuously intermesh with the sun wheel 41, as is customary in a planetary wheel gear mechanism. They also intermesh with one or two of the drive gearwheels 44, 48, 51 with the result that the latter can be driven by the motor 26 - via the main gearwheel 37, the sun wheel 41 and one of the planetary wheels 60, 61. By swivelling the planetary wheel carrier 42 it is possible to select which planetary wheel 60, 61 intermeshes with which of the drive gearwheels 44, 51, 48, further details on which will be given below.

A swivel wheel 64 is arranged coaxially with respect to the first planetary wheel 60, but lying underneath the planetary wheel carrier 42, and is connected to this planetary wheel 60 via a unidirectional clutch 38. A swivel toothing 65, with which the swivel wheel 64 intermeshes, is provided at the level of the swivel wheel 64 in the housing 46.

The unidirectional clutch 38 which is arranged between the first planetary wheel 60 and the swivel wheel 64 is designed to form a clutch connection when the main gearwheel 37 is driven in the first direction 31 of rotation, that is to say in the clockwise direction, and is structurally embodied as a wrap spring clutch. It is composed here of a single wrap spring 39 whose wrapping direction is selected such that, as the main gearwheel 37 and the sun wheel 41 are driven in rotation in the first direction 31 of rotation - as a result of which the planetary wheel 60 is driven in the anticlockwise direction - said wrap spring 39 is tightened onto the cylindrical part 64a of the swivel wheel 64 and consequently brings about a drive connection between the planetary wheel 60 and the swivel wheel 64. In order to bring about the drive connection between the wrap spring 39 and the swivel wheel 64, a bent-over prolongation stands out from one end of the wrap spring 39 in the radial direction, which prolongation projects into a slot in the cylindrical part 64a of the swivel wheel 64. The wrap spring 39 can also be connected by one end to the planetary wheel 60.

When the main gearwheel 37 is driven in the first direction 31 of rotation, a drive connection between the motor 26 and the swivel wheel 64 is thus formed via the sun wheel 41, the planetary wheel 60 and via the unidirectional clutch 38. A rotation of the motor 26 is converted by this drive connection into swivelling of the planetary wheel carrier 42 in the clockwise direction. In this way, the planetary wheels 60, 61 are also pivoted, disengaged from the drive wheel 44, 48, 51 with which they have just been intermeshing, and engaged with another drive wheel 44, 48, 51.

The rotation of the main gearwheel 37 in the first direction 31 of rotation is therefore used overall to select the drive wheel or wheels 44, 48, 51 to be driven.

The driving of these drive wheels 44, 48, 51 is then actually carried out when the main gearwheel 37 is driven in the second direction 32 of rotation: The unidirectional clutch 38 is disengaged here, with the result that there is no drive connection between the planetary wheel 60 and the swivel wheel 64 and the planetary wheel carrier 42 remains in its current position. The rotation of the motor 26 is transmitted via the drive connection, which is in any case permanently present, between the main gearwheel 37, sun wheel 41 and planetary wheel 60, 61, to those drive gearwheels 44, 48, 51 with which the planetary wheels 60, 61 intermesh at that time. The explained selection of the drive wheels 44, 48, 51 which can be driven at a particular time is necessary in order to implement the various operating modes of a facsimile device.

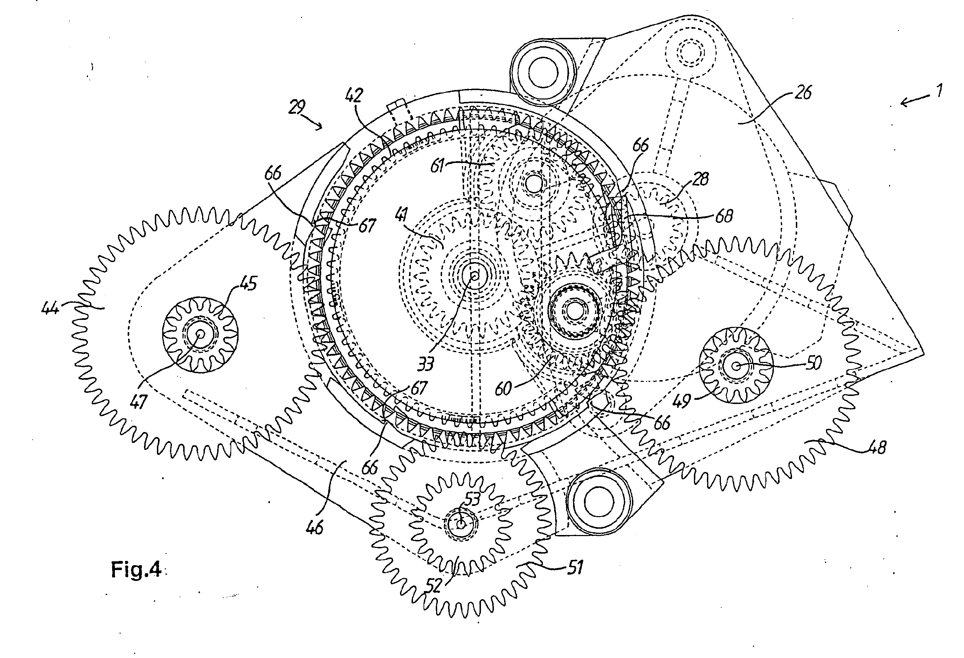

In Fig. 4, the device is in the blank-sheet separating mode. Here, only the first planetary wheel 60 intermeshes with the second drive gearwheel 48 by means of which only the blank-sheet separation roller 21 which is connected to this drive gearwheel 48 is driven.

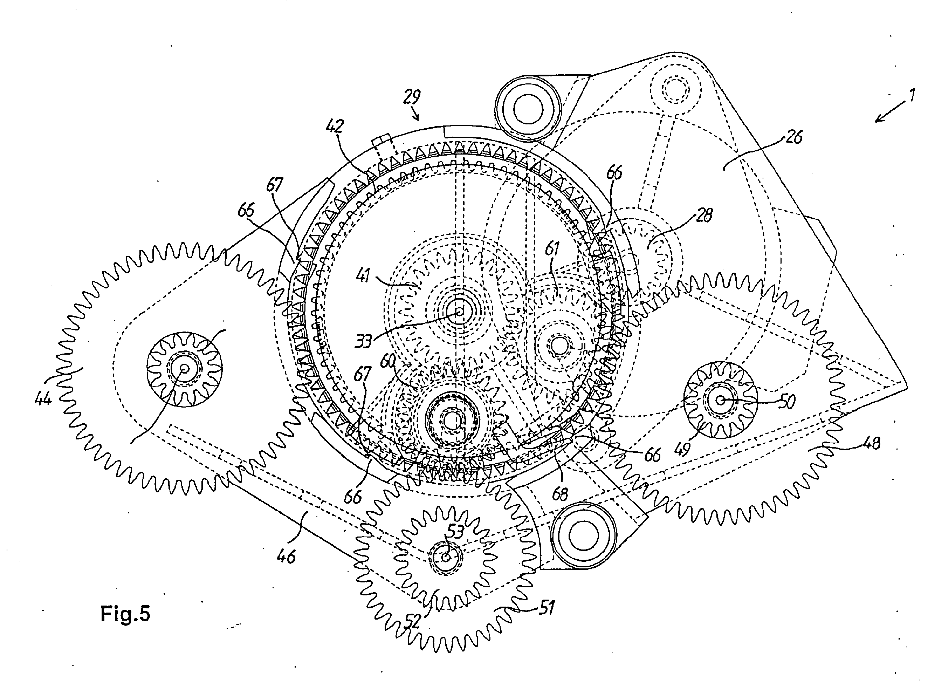

By swivelling the planetary wheel carrier 42 further by driving the main gearwheel 37 in the first direction 31 of rotation, the drive wheel 1 can be placed in a printing mode (illustrated in Fig. 5). Here, the planetary wheels 60, 61 engage with the third and second drive gearwheels 51 and 48, respectively, as a result of which the printer roller 9 and the blank-sheet separation roller 21 can be driven or, after the reversal of the direction of rotation of the main gearwheel 37, are actually driven.

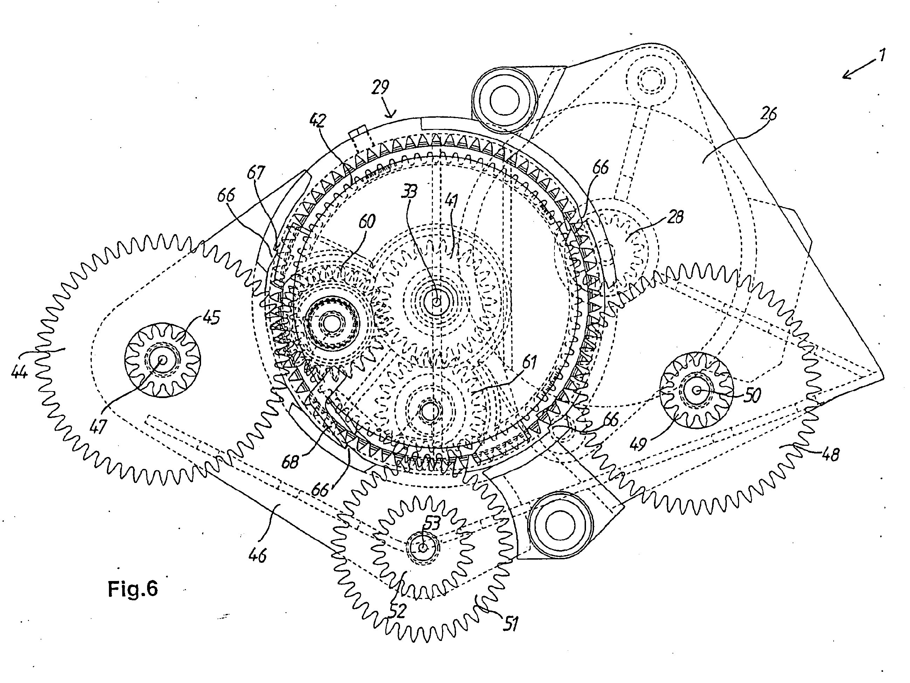

The drive unit 1 can be moved from this printing operation state into a copying state (illustrated in Fig. 6). In order to reach this copying state, the main gearwheel 37 is firstly driven in the first direction 31 of rotation until the planetary wheel carrier 42 has reached the position in Fig. 6. In this position, the first planetary wheel 60 then intermeshes with the first drive wheel 44, and the second planetary wheel 61 intermeshes with the third drive wheel 51. As soon as this position is reached, the direction of rotation of the motor 26 is reversed, with the result that, in the rest of the sequence, the unidirectional clutch 38 is opened and the original drive roller 4 which is connected to the first drive wheel 44 and the printer roller 9 which is connected to the third drive wheel are driven.

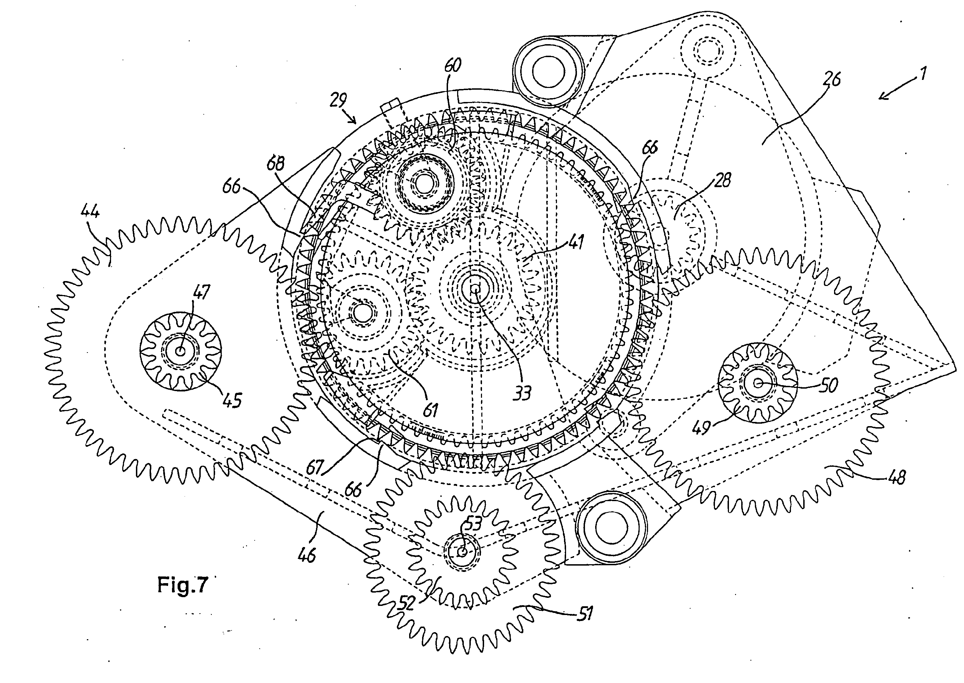

Repeated further turning of the planetary wheel carrier 42 moves the drive unit 1 into the scanning operating state illustrated in Fig. 7. Here, the second planetary wheel 61 intermeshes with the first drive wheel 44, and the first planetary wheel 60 is connected to none of the drive wheels 44, 48, 51. Therefore, only the original-sheet drive roller 4, which is connected to the first drive wheel 44, is driven.

The swivelling (just illustrated) of the planetary wheel carrier 42 for resetting the drive unit 1 into the individual operating modes or the necessary actuation of the motor 26 in the aforesaid directions of rotation is controlled by electronics or software (not illustrated).

In order to ensure that the planetary wheel carrier 42 always assumes the correct positions in which optimum intermeshing of the planetary wheels 60, 61 with the drive gearwheels 44, 48, 51 occurs, position sensors could be provided with which the position of the planetary wheel carrier 42 is detected. It would also be possible to dispense with such sensors and always to rotate the planetary wheel carrier 42 further by precisely those angles by which the individual drive gearwheels 44, 48, 51 are offset with respect to one another. In order to secure the planetary wheel carrier 42 it is possible to provide brakes which act on the carrier 42 when the positions are reached.

However, all such possibilities are less reliable and require additional components, namely the aforesaid sensors and brake devices.

In the exemplary embodiment illustrated in the enclosed drawings, latching projections 66 are provided which are arranged directly adjacent to the edge of the planetary wheel carrier 42 and are secured to the housing 46. The latching projection 66 could be embodied here as individual pins, but they are preferably attached to walls 69 which are constructed in the form of hollow-cylinder sections and are secured to the housing 46 running coaxially with respect to the planetary wheel carrier 42.

Elastically sprung latching arms 68 which project beyond the edge of the planetary wheel carrier 42 are attached to the planetary wheel carrier wheel 42, said latching arms 68 interacting with the latching projections 66 which are fixed to the housing. For this purpose, the latching arms 68 are oriented approximately tangentially with respect to the planetary wheel carrier 42 and have free ends 70 which can be made to bear against latching faces 67 of the latching projections 66. The latching faces 67 ascend radially with respect to the main axis 33 of the intermediate gear mechanism 29.

The number of latching projections 66 corresponds to the number of operating states and the number of positions which the planetary wheel carrier 42 is to assume or in which it is to remain. The latching projections 66 and the latching arms 68 are arranged here in such a way that the latching arms 68 come to bear on the latching face 67 of one of the latching projections 66 in each stable position which the planetary wheel carrier 42 is to assume.

In order to switch over the intermediate gear mechanism 29 into the next operating state, the control of the motor 26 causes the main gearwheel 37 to rotate in the direction 31 of rotation until the planetary wheel carrier 42 has rotated through the angle lying between the current position and the position to be assumed next and a small additional angle. The latching arms 68 slide here over the latching projection 66 which is assigned to the operating state to be assumed. The direction of rotation of the motor 26 is then reversed. The undirectional clutch 38 was engaged during the swivelling of the planetary wheel carrier 42.

This clutch is not entirely free of torque, in particular when a wrap spring clutch is used in the reversed direction of rotation, and brings about a movement in the planetary wheel carrier 42 in the opposed direction until the free ends 70 of the latching arm 68 bear against the latching faces 67 of the latching projection 66. This latching then reliably prevents any further swivelling of the planetary wheel carrier 42 into the opposed direction or brings about slipping of the unidirectional clutch 38.

As a result of the abovementioned overrotation of the planetary wheel carrier 42 and the subsequent rotating back until the latching arms 68 latch with the latching projections 66, the planetary wheel carrier 42 can be positioned very precisely while avoiding the need for any position sensors.

The angular intervals between the axes 47, 53, 50 of the drive gearwheels 44, 48, 51, and associated therewith the angular intervals between the latching projections 66 can basically be selected as desired. However, in the preferred exemplary embodiment shown in the drawings only two angular intervals α' and β', of different sizes, occur between two correctly adjacent axes 47, 50, 53 of the drive gearwheels 44, 48, 51:

The angle β' is located between the axis 47 of the first drive gearwheel 44 and the axis 53 of the third drive gearwheel 51. The angle β' is also located between the axis 53 of the third drive gearwheel 51 and the axis 50 of the second drive gearwheel 48. However, the angle α' which is larger by an order of magnitude is located between the axis 47 of the first drive gearwheel 44 and the axis 50 of the second drive gearwheel 48.

A total of four latching projections 66 are provided because, according to what is stated above, the gear mechanism is to assume four operating states (cf. Figs. 4-7). The angular intervals, which in each case two adjacent latching projections 66 enclose with one another with respect to the main axis 33 of the intermediate gear mechanism 29 are designated by α and β. There is a first angular interval β between the first latching projection 66, located at approximately the 10^{h} position in Fig. 3, and the second latching projection 66, located approximately at the 7^{h} position, as well as between this latching projection 66 and the third latching project 66, located approximately at the 4^{h} position, and between the third and the fourth latching projections 66, located approximately at the 2^{h} position.

The last-mentioned fourth latching projection 66 and the first latching projection 66 enclose however a significantly larger angular interval α with one another.

The angular intervals β which two adjacent latching projections 66 enclose with one another with respect to the main axis 33 of the intermediate gear mechanism 29 are, with the exception of a first angular interval α, of equal magnitude. In this case, the angular intervals β are smaller than this first angular interval α.

This arrangement firstly entails the advantage that, in order to switch over into the next operating state, the planetary wheel carrier 42 must be swivelled only by one and the same angle, namely β+Δβ. Δβ stands here for the already abovementioned small additional swivel angle which is required to slightly overrotate the position which the planetary wheel carrier 42 is actually to assume. The exception to this is the switching over from the scanning operating state (illustrated in Fig. 7) into the blank-sheet separating mode (illustrated in Fig. 4), and here the planetary carrier 42 must be swivelled by the angle α. In the exemplary embodiment of the appended drawings, the angular interval β of 75° is selected, 135° being obtained for the angle α (360° - 3 x 75° = 135°). With such a dimensioning of the angular intervals, the switching over from the scanning operating state into the blank-sheet separating mode is easily possible by virtue of the fact that the planetary wheel carrier 42 is simply swivelled twice through the angle β and the additional swivel angle Δβ, that is to say through 2β+Δβ. The motor controller must therefore be designed and/or programmed in such a way that, when the instruction "switchover intermediate gear mechanism into the next operating state" is received, it actuates the motor 26 in such a way that the planetary wheel carrier 42 is swivelled through the angle β+Δβ. The controller must also register the number of forward-switching instruction so that it brings about swivelling of the planetary wheel carrier 42 through 2α+Δβ every fourth time that this instruction is received.

This method of configuring the control assumes, however, a correct starting position of the planetary wheel carrier 42 and correspondence between the current position of the planetary wheel carrier 42 with the counter reading of the controller.

The intermediate gear mechanism 29 can be very easily moved into a defined starting position on the basis of the dimensioning of the angular intervals α and β between the latching projections 66 which has just been explained: as explained, it is possible to switch forwards from one operating state into the next operating state by swivelling the planetary wheel carrier 42 though an angle β+Δβ, excepting here the switching over from the scanning operating state in Fig. 7 into the blank-sheet separating mode in Fig. 4, for which a significantly larger swivel angle would be necessary. However, this means that, if the planetary wheel carrier 42 is always only swivelled repeatedly through an angle β+Δβ and the main gearwheel 37 is rotated back again by the amount corresponding to the angle β+Δβ, the planetary wheel carrier 42 must sooner or later "become stuck" in the scanning operating state in Fig. 7.

The scanning operating state is used therefore as a defined starting position which can be approached very easily, and independently of the current position of the planetary wheel carrier 42, in an initialization method by virtue of the fact that the planetary wheel carrier 42 is swivelled further by β+Δβ four times, the main gearwheel 37 being rotated back through the amount corresponding to the angle β+Δβ after each forward swivelling. If the planetary wheel carrier 42 latches in the process, those drive wheels 44, 48, 51 which are currently engaged with the planetary wheel 60, 61 are briefly driven. If the planetary wheel carrier 42 does not latch in, it is swivelled back again through β+Δβ.

The starting position 7 is thus reached in all cases: if the planetary wheel carrier 42 is in any case actually in this starting position, it does not latch in when it swivelled forwards through β+Δβ, but rather swivels back again through β+Δβ, that is to say swings to and fro in the region of the scanning position. If the planetary wheel carrier 42 is in a different position, three or two swivelling operations or one swivelling operation bring or brings about further switching into the next operating state until the scanning operating state is reached. However, the respectively remaining one, two or three further swivelling operations β+Δβ no longer cause the planetary wheel carrier 42 to leave this operating state.

If the main gearwheel 37 is swivelled back once by the amount corresponding to the angle α, it is possible to ensure that the latching arms 68 latch on latching faces 66. Such swivelling of the main gearwheel 37 can advantageously take place as a first step of the initialization method or during the first swivelling back. The drive unit 1 according to the invention is predominantly used in thermal paper facsimile units (illustrated in Fig. 1), but it is not restricted to this field of application. It can be used in any other device with a plurality of rollers which are to be driven, various rollers or various pairings of rollers having to be driven depending on the operating state. In particular, facsimile units which are equipped with laser or inkjet printers are possible examples here.

The illustrated number of three drive gearwheels 44, 48, 51 is not compulsory; it is possible to provide only two drive gearwheels or more than three drive gearwheels. The same applies to the number of planetary wheels 60, 61: depending on the requirements of the specific field of application it is possible to provide only one planetary wheel 60 or more than the two planetary wheels 60, 61 illustrated.

When there are a plurality of drive gearwheels 44, 48, 51 and/or a plurality of planetary wheels 60, 61 it is possible to provide a plurality of operating states, as a result of which the planetary wheel carrier 42 must be able to assume more than four positions. Accordingly, more than four latching projections 66 are to be provided, but the specified dimensioning values of the angular intervals between the latching projections 66 are to be retained.

In other embodiments of a drive unit, it is also possible to provide a different number of latching projections 66 and latching arms 68, it also being possible to arrange the latching projections on the carrier 42. An essential factor for the execution of the initialization method according to the invention is that the first carrier has first latching means 68 can be latched to preferably fixed second latching means 66 forming latching positions, and that the carrier 42 is moved in the second direction 32 of rotation as far as the next latching position. Furthermore, for the initialization method according to the invention, it is expedient that the largest interval occurring between two adjacent latching positions is formed precisely once.

Then, the initialization method according to the invention can [lacuna] by means of the repeated running through of a cycle in which the carrier 42 is moved in the first direction of rotation by an initialization distance which can be predefined in the range between the largest distance between two adjacent latching positions and the second largest distance between two adjacent latching positions, and is then rotated back again by at least this amount if it has not already stayed in a latching position. If this cycle is carried out in accordance with the number of latching positions, it is ensured that the carrier 42 is in the latching position which precedes the largest interval between two adjacent latching positions.

Instead of a disc, the carrier can also be embodied as a conveyor belt or the like, only one cyclical change for one latching position into the next having to occur.

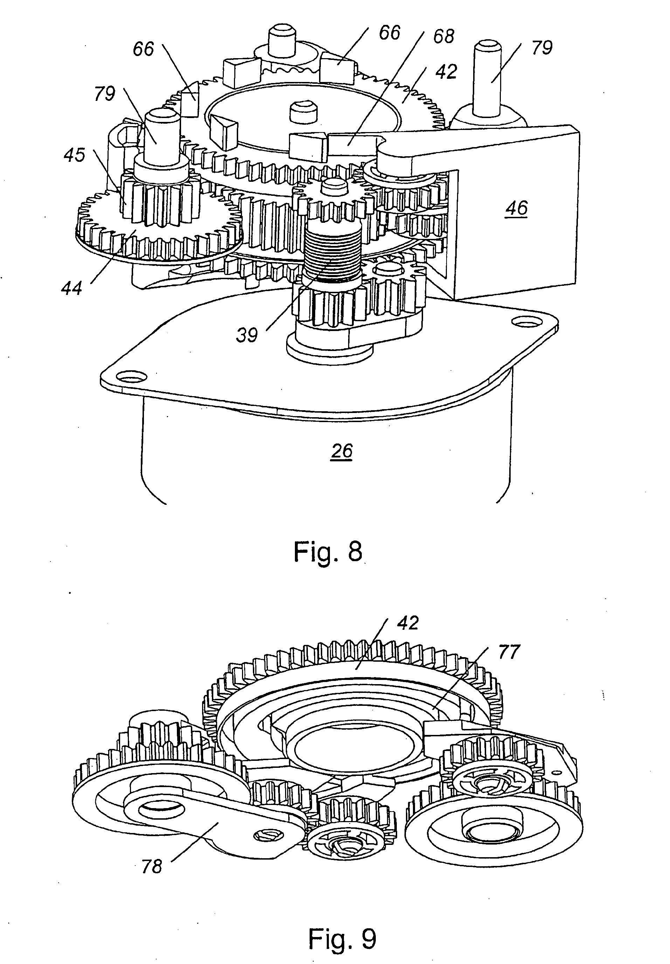

Figs 8 and 9 illustrate a different embodiment of a drive unit 1 with which the initialization method according to the invention can be carried out. Here, the carrier 42 has latching projections 66 and the housing 46 has a latching arm. As is apparent from Fig. 9, the carrier 42 has, on its underside, a slot 77 in which control pins of swivel arms 78, connected to the drive pinions 45, 49, 52, engage.

The carrier 42 is connected to the motor 26 by means of the unidirectional clutch 38, as a result of which it can be driven in the first direction 31 of rotation. When the driving direction is reversed, the carrier 42 is entrained in the second direction 32 of rotation as far as the position where the latching projections 66 latch with the latching arm 68.

The largest distance between two adjacent latching projections 66 is formed precisely once, for which reason the initialization method according to the invention can also be used with this embodiment of the drive unit 1.

## Claims

1. A drive unit (1) having, held in a housing (46), a motor (26) whose direction of rotation can be switched over, an intermediate gear mechanism (29) which can be driven by means of the motor (26), at least two drive gearwheels (44, 48, 51) which can be driven using the motor (26) by means of the intermediate gear mechanism (29), the intermediate gear mechanism (29) having the purpose of optionally bringing about a drive connection between the motor (26) and at least one drive wheel (44, 48, 51), the intermediate gear mechanism (29) comprising :
a main gearwheel (37) which can be driven in rotation by means of the motor (26) and which has a stub axle (40) on which a sun wheel (41) is secured and a planetary wheel carrier (42) is rotatably mounted, and
at least one planetary wheel (60) which is rotatably mounted in the planetary wheel carrier (42) and intermeshes with the sun wheel (41),
the main gearwheel (37) being arranged for driving the drive gearwheels (44, 48, 51) through the planetary wheel (60) when it is driven in one direction and for swivelling the planetary wheel carrier (42) through swivelling means (60, 38, 64) when it is driven in the opposite direction,
wherein the swivelling means (60, 38, 64) comprises
a swivel wheel (64) which is arranged coaxially with respect to the planetary wheel (60), is connected to the planetary wheel (60) via a unidirectional clutch (38) and intermeshes with a swivel toothing (65) which is arranged in the housing (46).

2. Drive unit according to claim 1, **characterized in that** latching projections (66) which are arranged on the housing (46) directly adjacent to the edge of the planetary wheel carrier (42) and which have latching faces (67) which are radial with respect to the main axis (33) of the intermediate gear mechanism (29), and **in that** elastically sprung latching arms (68) are secured to the planetary wheel carrier (42) so as to project beyond its edge and the free ends (70) of said latching arms (68) can be made to bear against the latching faces (67) of the latching projections (66).

3. Drive unit according to claim 2, **characterized in that** the latching projections (66) are arranged on walls (69) which are constructed in the form of hollow-cylinder sections and are secured to the housing (46) so as to run coaxially with respect to the planetary wheel carrier (42).

4. Drive unit according to claim 2 or 3, **characterized in that** the angular interval (β or β') Which enclose two adjacent latching projections (66) or two adjacent axes (47, 50, 53) of the drive gearwheels (44, 48, 51) with one another with respect to the main axis (33) of the intermediate gear mechanism (29) are, with the exception of a first angular interval (α or α'), of equal magnitude and are each smaller than this first angular interval (α or α').

## Patentansprüche

1. Eine Antriebseinheit (1), welche in einem Gehäuse (46) gehalten ist, ein Motor (26) dessen Rotationsrichtung gewechselt werden kann, ein Zwischengetriebe (29), welches durch den Motor (26) angetrieben werden kann, mindestens zwei Zahnräder (44, 48, 51), welche mithilfe des Motors (26) durch das Zwischengetriebe (29) angetrieben werden können, wobei das Zwischengetriebe (29) das Ziel verfolgt, optional eine Triebverbindung zwischen Motor (26) und mindestens einem Antriebsrad (44, 48, 51) herzustellen und das Zwischengetriebe (29) auf folgenden Komponenten besteht:
Einem Hauptzahnrad (37), das rotierend mittels des Motors (26) angetrieben werden kann und einen Achsschenkel (40) besitzt, auf dem ein Sonnenrad (41) gesichert ist und einem Planetenradträger (42), welcher drehbar montiert ist und
mindestens ein Planetenrad (60), welches drehbar auf dem Planetenradträger (42) montiert und mit dem Sonnenrad (41) verzahnt ist,
wobei das Hauptzahnrad (37) für den Antrieb der Antriebszahnräder (44, 48, 51) durch das Planetenrad (60) angeordnet ist, wenn es In eine Richtung gefahren wird und zum Schwenken der Planetenradträger (42) durch die Schwenkmittel (60, 38, 64), wenn es in die andere Richtung gefahren wird,
wobei die Schwenkmittel (60, 38, 64) aus einem Schwenkrad (64) bestehen, welches koaxial in Bezug auf das Planetenrad (60) angeordnet ist und mit dem Planetenrad (60) über eine unidirektionale Kupplung (38) verbunden und verzahnt ist über eine Schwenkverzahnung (65), welche im Gehäuse (46) angeordnet ist.

2. Antriebseinheit gemäß Anspruch 1, **gekennzeichnet dadurch dass** die Rastvorsprünge (66), welche im Gehäuse (46) direkt an das Rand des Planetenradträgers (42) angrenzen und welche radial in Bezug auf die Hauptachse (33) des Zwischengetriebes (29) Rastvorsprünge (67) aufweisen und in das elastische federnde Rastarme (68) an dem Planetenradträger (42) gesichert sind, sodass über den Rand die freien Enden (70) der besagten Rastarme (68) verändert werden können, um die Rastflächen (67) gegen die Rastvorsprünge (66) zu stützen.

3. Antriebseinheit gemäß Anspruch 2, **gekennzeichnet dadurch dass** die Rastvorsprünge (66) gegen die Wände (69) angeordnet sind, welche in Form einer Hohlzylindersektion aufgebaut und an das Gehäuse (46) gesichert sind, sodass sie koaxial im Verhältnis zum Planetenradträger (42) bewegt werden können.

4. Antriebseinheit gemäß Anspruch 2 oder 3, **gekennzeichnet dadurch dass** die Winkelabstände (β oder β'), welche zwei benachbarte Rastvorsprünge (66) umschließen oder zwei angrenzende Achsen (47, 50, 53) der Antriebsräder (44, 48, 51), mit einer weiteren in Bezug auf die Hauptachse (33) des Zwischengetriebes (29), mit der Ausnahme eines ersten Winkelabstands (a oder a') einer gleichwertigen Magnitude und jeweils kleiner als der erste Winkelabstand (a oder a'), haben.

## Revendications

1. Unité d'entraînement ayant, maintenus dans un boîtier (46), un moteur (26) dont le sens de rotation peut être commuté, un mécanisme d'engrenage intermédiaire (29) qui peut être entraîné au moyen du moteur (26), au moins deux roues dentées d'entraînement (44, 48, 51), qui peuvent être entraînées en utilisant le moteur (26) au moyen du mécanisme d'engrenage intermédiaire (29), le mécanisme d'engrenage intermédiaire (29) ayant pour objet d'assurer éventuellement une liaison d'entraînement entre le moteur (26) et au moins une roue d'entraînement (44, 48, 51), le mécanisme d'engrenage intermédiaire (29) comprenant :
une roue dentée principale (37) qui peut être entraînée en rotation au moyen du moteur (26) et qui a un bout d'axe (40) sur lequel une roue planétaire (41) est fixée et un porte-roue planétaire (42) est monté à rotation, et
la roue dentée principale (37) étant aménagée pour entraîner les roues dentées d'entraînement (44, 48, 51) via la roue planétaire (60) lorsqu'elle est entraînée dans un sens et pour faire pivoter le porte-roue planétaire (42) via des moyens de pivotement (60, 38, 64) lorsqu'elle est entraînée dans le sens opposé,
dans laquelle les moyens de pivotement (60, 38, 64) comprennent une roue pivotante (64) qui est aménagée coaxialement par rapport à la roue planétaire (60), est raccordée à la roue planétaire (60) via un embrayage unidirectionnel (38) et s'engrène sur une denture pivotante (65) qui est aménagée dans le boîtier (46).

2. Unité d'entraînement selon la revendication 1, **caractérisée en ce que** des saillies de verrouillage (66) sont aménagées sur le boîtier (46) directement adjacentes au bord du porte-roue planétaire (42) et ont des faces de verrouillage (67) qui sont radiales par rapport à l'axe principal (33) du mécanisme d'engrenage intermédiaire (29) et **en ce que** des bras de verrouillage suspendus élastiquement (68) sont fixés au porte-roue planétaire (42) de façon à faire saillie au-delà de son bord et les extrémités libres (70) desdits bras de verrouillage (68) peuvent être tels qu'elles portent contre les faces de verrouillage (87) des saillies de verrouillage (66).

3. Unité d'entraînement selon la revendication 2, **caractérisée en ce que** les saillies de verrouillage (66) sont aménagées sur des parois (69) qui sont construites sous la forme de sections de cylindre creux et sont fixées au boîtier (49) de façon à courir axialement par rapport au porte-roue planétaire (42).

4. Unité d'entraînement selon la revendication 2 ou 3, **caractérisée en ce que** les intervalles angulaires (β ou β') qui enserrent deux saillies de verrouillage (66) adjacentes ou deux axes adjacents (47, 50, 53) des roues dentées d'entraînement (44, 48, 51) mutuellement par rapport à l'axe principal (33) du mécanisme d'engrenage intermédiaire (29) sont, à l'exception d'un premier intervalle angulaire (α ou α'), d'égale amplitude et sont chacun plus petits que ce premier intervalle angulaire (α ou α').
